# EUROPEAN PATENT SPECIFICATION

(11) **EP 2 584 196 B1**
(45) Date of publication and mention of the grant of the patent: **30.09.2015**
(21) Application number: 11725126.4
(22) Date of filing: 08.04.2011
(51) Int. Cl.: F03G 7/08

(54) **MECHANISM FOR GENERATING ELECTRICAL ENERGY**
MECHANISMUS ZUR ERZEUGUNG ELEKTRISCHER ENERGIE
MÉCANISME DE PRODUCTION D'ÉNERGIE ÉLECTRIQUE

(30) Priority: 17.06.2010 ES 201030936
(43) Date of publication of application: 24.04.2013
(73) Proprietor: Inintek Software, S.L.U., 26002 Logroño (La Rioja) (ES)
(72) Inventor: LOPEZ TOLEDANO, David, 31587 Mendavia (Navarra) (ES); MATUTE SAINZ, Ismael, 31587 Mendavia (Navarra) (ES)
(74) Representative: Pons Ariño, Angel
(86) International application number: PCT/ES2011/070240
(87) International publication number: WO 2011/157872

(56) References cited:
- DE-A1- 2 941 079
- DE-A1- 10 108 265
- DE-A1-102008 025 488
- GB-A- 2 254 111
- US-A- 4 739 179

## Description

### OBJECT OF THE INVENTION

The present invention belongs to the field of mechanisms and apparatus for the production of mechanical power, and more specifically to energy recovery devices by movements of rocking, rolling, tilting or similar.

The main object of the present invention is an electrical energy generation mechanism from the passage of vehicles over lanes and/or roads.

### BACKGROUND OF THE INVENTION

Currently, the serious existing problem referring to polluting emissions from the burning of fossil fuels for energy generation is well known. To resolve this problem, the current trend is to develop new energy generation systems that do not require the use of said fuels, such as, for example, solar power, wind power or power from marine currents.

Likewise, it is known that the mass traffic of motor vehicles is one of the great problems affecting our daily life, being particularly evident in the large cities where, far from decreasing, the quantity of vehicles is constantly and significantly increasing. On the other hand, the infrastructures existing today are increasing scarce and ineffective to respond to the increase in traffic, with the serious consequences that this entails.

For these reasons, a first technical problem posed here is having a system that allows the production of electrical energy from the transit of vehicles along lanes and/or roads, making use of the points where said vehicles are obliged to reduce their velocity or to stop, such as give ways, tolls, accesses to cities, urban areas, etc. Although for some years now back proposals for recovery of the kinetic energy of vehicles has been made, whether using hydraulic, mechanical or pneumatic systems, none of said known devices has managed to efficiently resolve the problem posed.

All these known systems have in common that on the road they have a mobile element coupled to the energy recovery device, and actuated on the passage of the vehicle. Said mobile element moves until remaining under the road, for which reason there must be a cavity expressly made to house the mobile element. In this respect, a second technical problem lies in the fact that these spaces or cavities made in the road suppose a discontinuity for transit in certain conditions and for certain vehicles, in addition to being an important danger, since they allow the entry of objects and may place at risk the mechanism and even block it causing its breaking or causing instability in the vehicles.

On the other hand, a third technical problem existing in current devices is when a motor vehicle (car, motorbike, van, truck, etc.) has the need to travel in opposite direction or move backwards, both the cavity and the mobile element hinder or prevent this manoeuvre. Finally, another drawback present in said devices is that they do not bear in mind the different conditions or circumstances that may arise in the traffic of vehicles, for which reason the generation of energy obtained by these devices has a low efficiency and performance.

This problem was already known by earlier disclosures detailing the use for generation of electrical energy of the passage of vehicles over a road. Hence:
- DE10108265 where a current creating process is achieved as vehicles drive over mechanical flaps, pressing them down, along with the drive rods, which move a load lever which turns a flywheel with a freewheel device. When the vehicle wheel has driven off the flap, it is returned to its initial position by springs.
- US4739179 which details a system for generating power by vehicular movement having treadle plates upon which a vehicle overpasses. Treadle plates are pivotally fitted to the top of the vertical shafts. Resilient, compressible bladders are each fitted with an inlet and an exhaust, pressure plates for compressing the bladders, a series of connecting links, fulcrums, levers and arms, directly or indirectly attached to the lower portion of the vertical shafts and also to the pressure plates, and a generating means for converting the compressed fluid into electricity. As the vehicle overpasses the treadle plates, the vertical shafts are forced downwardly, and, accordingly, force is applied to the upper and lower plates via the linking system, thus compressing the bladder and the working fluid therein. The compressed fluid is then driven through pipelines into the generator, causing the production of power. In an alternate embodiment, cylinders and pistons are substituted for the bladders, and upon the overpass of a vehicle, the vertical shafts are forced downward, the pistons are forced into the cylinders, and the resulting compressed fluid is expelled to the generating means.
- GB2254111 , this document discloses a platform comprising pivotally mounted portions is reciprocated by traffic passing thereover to drive a shaft via a bar, plate and dog-tooth clutch arrangement. The shaft in turn drives an electric generator. The platform may be deflected against a bias provided by a weight. Alternatively the bias may be provided by a springand the platform portions may engage for relative movement by means of rollers , rolling on corner bars.

### DESCRIPTION OF THE INVENTION

The present invention resolves the aforementioned drawbacks, providing an electrical energy generation mechanism from the passage of vehicles over a lane or road, which in addition to allowing the transit of vehicles in both directions, makes it possible to optimize the energy generated thanks to the obtainment of information regarding the traffic parameters such as the velocity or weight of the vehicles; and whose mobile elements as they are contained under the road, do not present discontinuities, spaces or cavities that may affect the transit of vehicles or the internal protection of the mechanism object of the invention.

The electrical energy generation mechanism from the passage of vehicles over a road comprises an articulated structure with the form of a quadrilateral, consisting of two horizontal struts and two vertical struts. The horizontal struts are fixed in their midpoint to two fixed shafts, so that it allows the rocking movement of the structure around these two shafts. The vertical struts, on the other hand, are fixed to two consecutive support surfaces, the articulation of the structure enabling that the vertical struts remain in vertical position at all times. Thus, with the structure situated under the road level, an alternative movement of an actuation surface between a first position above road level and a second position under road level caused by the passage of a vehicle is transmitted through rocking of the structure in an opposite alternative movement of the other actuation surface.

With this configuration, when the wheel of a vehicle passes over a first actuation surface which is raised, this descends until concealing itself under the road, a movement which causes a rotation of the rocker to raise the second actuation surface above the road. When the wheel passes over this second actuation surface, its lowering also causes the raising of the first actuation surface, this mechanism returning to its initial position. Preferably, the actuation surfaces are two ramps inclined towards the same side and disposed consecutively according to the direction of the road so that the wheel of a vehicle acts on one ramp just after having acted on the previous.

The energy generation mechanism further comprises two connection means that connects each arm of the lever formed by the horizontal strut of the structure with two respective pinions fixed to two corresponding drive wheels. Thus, the rocking movement that the passage of a vehicle on the support surfaces causes in the horizontal strut transforms into different rotation movements of the drive wheels. These, in turn, are connected with idler wheels fixed to the shaft of an alternator and configured to transmit the rotation movement to it. The idler wheels drag the generator shaft in one direction, freely rotating when they are made to rotate in the opposite direction, and their function is to avoid the locking of the mechanism that could occur due to the drive wheels rotating simultaneously in opposite directions.

According to a preferred embodiment of the invention, each connection means between the lever and one of the pinions is a toothed section of circular shape and concentric with the rotation shaft of one of the horizontal struts fixed to the horizontal strut and geared with said pinion.

Furthermore, preferably the diameter of the drive wheels is greater than that of the idler wheels of the shaft, thus managing to increase the number of revolutions transmitted to the alternator shaft. Additionally, it is possible to use multipliers between the drive wheels and the idler wheels of the alternator shaft in order to further maximize the number of revolutions transmitted.

Finally, in order to permit a total continuity and availability of the road, for those situations that demand the removal of any obstacle existing on the roadway, whether due to the passage of a cycle race, special vehicles, public demonstrations, fun runs, etc., the disposal of lowering/raising means has been provided, linked to the fixed shafts of the articulated structure, adapted to conceal or raise the energy generation mechanism object of the invention. Finally, we should indicate that said lowering/raising means may be manual, automatic or wireless activation.

### DESCRIPTION OF THE DRAWINGS

To complement the description being made and in order to aid towards a better understanding of the characteristics of the invention, in accordance with a preferred example of practical embodiment thereof, a set of drawings is attached wherein, with illustrative and non-limiting character, the following has been represented:
Figure 1.- Shows a particular embodiment of the mechanism of the invention when the wheel of a vehicle is just about to pass over a first actuation surface.
Figure 2.- Shows the mechanism of figure 1 when the wheel is just about to pass over the second actuation surface.
Figure 3.- Shows a plan view of a road that has the energy generation mechanism in accordance with a second preferred embodiment, where a plate is observed equipped with two groupings of grooves.
Figure 4.- Shows a side view of one of the mobile elements designed to be inserted in each of the grooves of the plate of the figure 3, and where we can observe the disposal of ramps on both sides of the groove, allowing the transit of vehicles in two directions.
Figure 5.- Shows a schematic view of the different elements that intervene in the energy generation mechanism in accordance with a third preferred embodiment of the invention.

### PREFERRED EMBODIMENT OF THE INVENTION

Below, examples of preferred embodiment are described below making mention of the aforementioned figures, without this limiting the scope of protection of the present invention.

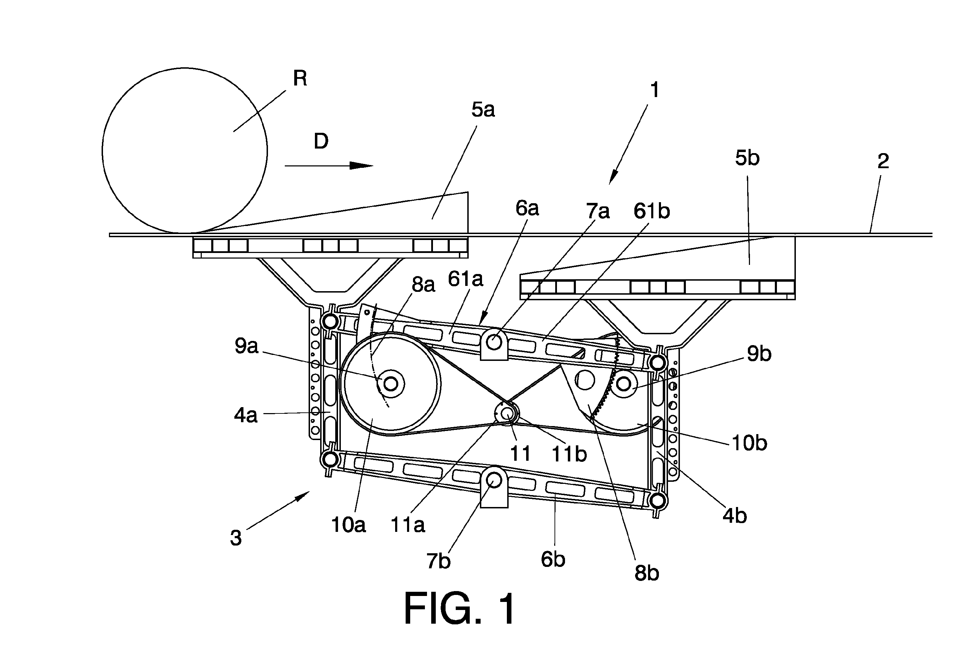

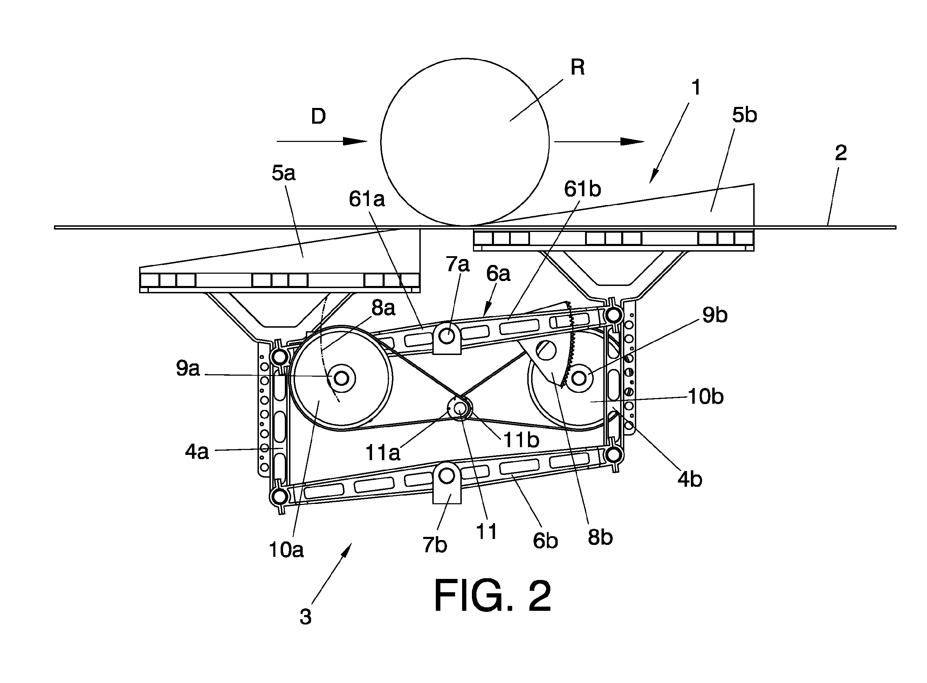

In accordance with a first preferred embodiment shown in figures 1 and 2, the electrical energy generation mechanism (1) from the passage of vehicles over a road (2) comprises an articulated structure (3) with the form of a quadrilateral, consisting of two vertical struts (4a, 4b) and two horizontal struts (6a, 6b).

The horizontal struts (6a, 6b) are respectively fixed in their midpoint to different fixed shafts (7a, 7b), so that it allows the rocking of the structure (3). Furthermore, the fact that the structure (3) is articulated implies that its four corners allow rotation, so that during the rocking of the structure (3) its vertical struts (4a, 4b) remain at all times in vertical position. Said vertical struts (4a, 4b) are also joined to two actuation surfaces (5a, 5b), which in the present embodiment are two flat ramps disposed consecutively according to the direction (D) of the road (2) along which the vehicles move.

In this example, each side of the fixed shaft (7a) of a horizontal strut (6a) has a connection means (8a, 8b) fixed which joins the horizontal strut (6a) with a pair of drive wheels (10a, 10b) to transform the alternating rocking movement of the horizontal strut (6a) in a rotation movement of the drive wheels (10a, 10b).

Likewise, as can be observed in figures 1 and 2, the connection means (8a, 8b) are toothed wheels of circular shape fixed to the horizontal strut (6a) and geared with pinions (9a, 9b) of the drive wheels (10a, 10b), although it is understood that other configurations are possible. Furthermore, although it is not shown in this example, preferably the connection means (8a, 8b) is fixed to the ends of the horizontal strut (6a), thus maximizing the path during the rocking movement and, in consequence, also the number of revolutions transmitted to the drive wheels (10a, 10b).

Finally, the drive wheels (10a, 10b) are connected to the shaft (11) of an alternator through different idler wheels (11a,11b), so that during each stage of raising or lowering of the actuation surfaces (5a, 5b), only one of the drive wheels (10a, 10b) drags the alternator shaft (11), the idler wheel (11 a,11 b) of the other freely rotating.

The operation of this mechanism (1) is the following. Figure 1 shows a first position of the mechanism (1) wherein the first actuation surface (5a) is its upper position and, in consequence, the second actuation surface (5b) is in its lower position. At that time, a wheel (R) passes over the first actuation surface (5a), making it lower to its lower position represented in figure 2. That vertical lowering movement is transmitted by the connection means (8a, 8b) to the pinions (9a, 9b), causing the rotation of the drive wheels (10a, 10b), which, in turn, make the shaft (11) of the alternator rotate by means of connection belts coupled to different idler wheels (11 a,11 b).

Thus, in accordance with this first preferred embodiment, during the lowering of the first actuation surface (5a) only the idler wheel (11 a) of the drive wheel (10a) is geared, making the alternator shaft (11) rotate to the left. Correspondingly, during the lowering of the lowering of the second actuation surface (5b), only the idler wheel (11b) of the drive wheel (10b) will be geared, so that the alternator shaft (11) is made to rotate again to the left. Note that in figure 2 the wheel (R) is again about to pass over the second actuation surface (5b), repeating the process. In other words, the mechanism (1) of the invention makes it possible to duplicate the energy obtained by the passing of each wheel (R).

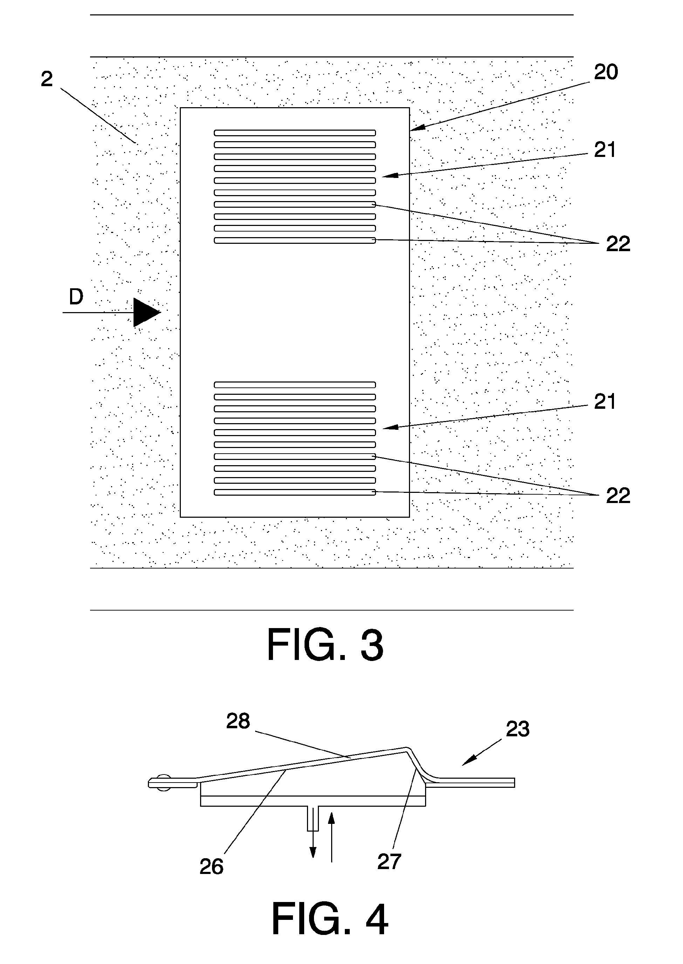

On the other hand, in accordance with a second preferred embodiment shown in figures 3 and 4, the electrical energy generation mechanism additionally comprises:
- at least one plate (20), designed to be transversally installed in a road (2), equipped with two groupings (21) of grooves (22), said groupings (21) being situated in the proximities of the lateral ends of the road (2) over which the wheels (R) of a vehicle are designed to pass,
- mobile elements (23), that protrude with respect to the horizontal of the road (2), dimensionally adapted to be inserted in their lower part in the grooves (22) of the plate (20), said mobile elements (23) performing a lowering and raising movement after the passage over them of the wheels (R) of each vehicle, and
- an electrical energy generator device (24), linked to the mobile elements (23) and adapted for electrical energy generation from the raising and lowering movements of said mobile elements (23), the energy generated being finally transported to the general grid (25).

It should be indicated that in the space between the two groupings (21) of grooves (22), see figure 3, the plate (20) is continuous and does not have any mobile element (23), so that it allows the safe passage of two-wheel vehicles through the plate (20).

Likewise, as shown in said figure 3, the grooves (22) are disposed on the plate (20) parallel by way of a grille, and in the longitudinal direction of the road (2), coinciding with the direction "D" of travelling of the vehicles. This comb or grille configuration of the grooves (22) enables the wheel (R) of the vehicle to simultaneously rest both on the mobile element (23) and on the plate (20) fixed disposed on the road (2), thus eliminating the appearance of cavities or spaces where the wheel (R) may impact.

For its part, as can be observed in figure 4, each of the mobile elements (23) comprises two ramps (26, 27), one on each side thereof, the ramp (26) placed in the direction of movement of the vehicles being gentler, and the ramp (27) that permits the passage of vehicles in opposite direction having a more pronounced gradient.

Additionally, in order to increase the continuity of the plate (20) the disposal of a sheet (28) has been provided of flexible and deformable material that covers the grooves (21) when the mobile elements (23) are concealed under the road (2), improving and optimizing the behaviour of the tyres as they pass over the plate (20), and thus avoiding the entry of objects inside the mechanism (1).

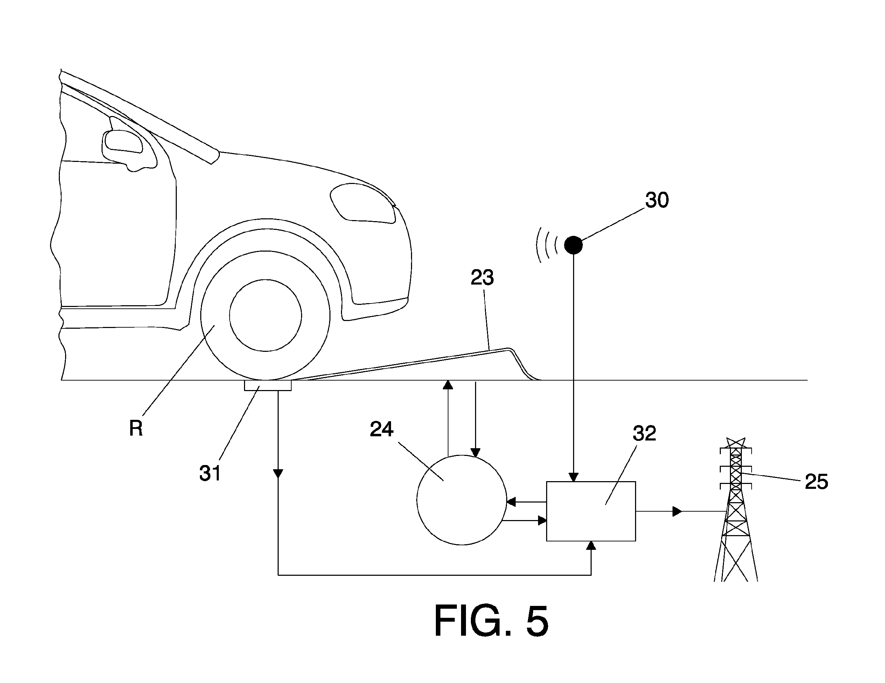

Finally, a variation of this second embodiment shown in figure 5 consists of the incorporation of the following elements in the mechanism (1) object of invention, additionally comprising:
- a velocity sensor (30) adapted to obtain the velocity of the vehicles that are travelling along the road (2), before passing over the mechanism (1) object of invention,
- a weight sensor (31) that determines the weight of each vehicle as it passes over the mechanism (1), and
- an electronic circuit (32) that receives information from the velocity (30) and weight (31) sensors respectively, and depending on these parameters increases or reduces the resistance transmitted to the generator device (24) and therefore to the mobile elements (23) of the plate (20), so that an increase in the resistance in said generator device (24) causes a greater resistance to the passage of the vehicle.

When the weight sensor (31) detects that the total mass of the vehicle is greater than that provided in the initial design of the plate (20), the resistance increases so that the energy generated in the generator device (24) increases. In contrast, when the weight is less, the resistance of the mobile elements (23) decreases, so that the vehicle performs a smooth transit as it passes over the plate (20) described here.

For its part, when the velocity sensor (30) detects a velocity of the vehicle greater than that of the design, the resistance of the mobile elements (23) decreases so that the passage of the vehicle is gentler; if less, no action will be performed.

## Claims

1. Electrical energy generation mechanism (1) from the passage of vehicles over a road (2), **characterized in that** it comprises:
- an articulated structure (3) with the form of a quadrilateral, the vertical struts (4a, 4b) whereof are coupled to first and second consecutive actuation surfaces (5a, 5b), and the horizontal struts (6a, 6b) whereof are fixed in their midpoint to two fixed shafts (7a, 7b), the structure (3) being situated under road (2) level so that an alternative movement of the first actuation surface (5a) between a first position above road (2) level and a second position under the road (2) level caused by the passage of a vehicle is transmitted through rocking of the structure (3) in an opposite alternative movement of the second actuation surface (5b); and
- two connection means (8a, 8b) that connect each arm (61 a, 61 b) of the lever formed by a horizontal strut (6a) of the structure (3) with two respective pinions (9a, 9b) disposed in two corresponding drive wheels (10a, 10b), so that the rocking movement of said horizontal strut (6a) transforms into rotation movements of the drive wheels (10a, 10b), and where said drive wheels (10a, 10b) are also connected to the shaft (11) of an alternator through idler wheels (11a, 11b) configured to transmit said rotation movement to said shaft (11).

2. Electrical energy generation mechanism (1), according to claim 1, **characterized in that** each connection means (8a, 8b) comprises a toothed section fixed to the horizontal strut (6a) and geared with the pinion (9a, 9b) of a drive wheel (10a, 10b).

3. Electrical energy generation mechanism (1), according to claim 2, **characterized in that** the toothed section has circular shape and concentric to the fixed shaft (7a, 7b) of the horizontal strut (6a, 6b).

4. Electrical energy generation mechanism (1), according to claim 1, **characterized in that** the actuation surfaces (5a, 5b) are two ramps inclined towards the same side and disposed consecutively according to the direction of the road (2) so that the wheel (R) of a vehicle acts on one ramp just after having acted on the previous.

5. Electrical energy generation mechanism (1), according to claim 1, **characterized in that** it additionally comprises a stage of multiplication disposed between each drive wheel (10a, 10b) and the idler wheels (11 a,11 b) of the alternator shaft (11).

6. Electrical energy generation mechanism (1), according to claim 1, **characterized in that** the connection means (8a, 8b) is fixed to the ends of the horizontal strut (6a).

7. Electrical energy generation mechanism (1), according to claim 1, **characterized in that** it additionally comprises lowering/raising means, linked to the fixed shafts (7a, 7b) of the articulated structure (3), adapted to conceal or raise the energy generation mechanism (1), thus making it possible to obtain a total continuity in the road (2).

8. Electrical energy generation mechanism (1), according to claim 1, **characterized in that** it additionally comprises:
- at least one plate (20), designed to be transversally installed in a road (2), equipped with two groupings (21) of grooves (22), said groupings (21) being situated in the proximities of the lateral ends of the road (2) whereby the wheels (R) of the vehicles are designed to pass,
- mobile elements (23), that protrude with respect to the horizontal of the road (2), dimensionally adapted to be inserted in their lower part in the grooves (22) of the plate (20), said mobile elements (23) performing a lowering and raising movement after the passage over them of the wheels (R) of each vehicle, and
- an electrical energy generator device (24), linked to the mobile elements (23) and adapted for the electrical energy generation from the raising and lowering movements of said mobile elements (23).

9. Electrical energy generation mechanism (1), according to claim 8, **characterized in that** the grooves (22) are disposed on the plate (20) parallel to one another, in the longitudinal direction of the road (2) coinciding with the travelling direction "D" of the vehicles.

10. Electrical energy generation mechanism (1), according to claim 8, **characterized in that** each one of the mobile elements (23) comprises two ramps (26, 27), one on each side thereof, the ramp (26) placed in the direction of movement of the vehicles being gentler, and the ramp (27) that permits the passage of vehicles in opposite direction having a more marked gradient.

11. Electrical energy generation mechanism (1), according to claim 8, **characterized in that** it additionally comprises a sheet (28) of flexible and deformable material that covers the grooves (21) of the plate (20) when the mobile elements (23) are concealed under the road (2).

12. Electrical energy generation mechanism (1), according to any of claims 8 to 11, **characterized in that** it additionally comprises:
- a velocity sensor (30) adapted to obtain the velocity of the vehicles that are travelling along the road (2), before passing over the energy generation mechanism (1),
- a weight sensor (31) that determines the weight of each vehicle as it passes over the mechanism (1), and
- an electronic circuit (32) that receives information from the velocity (30) and weight (31) sensors respectively, and depending on these parameters increases or reduces the resistance transmitted to the generator device (24) and therefore to the mobile elements (23) of the plate (20), so that an increase in the resistance in said generator device (24) causes a greater resistance to the passage of the vehicle, and therefore a greater electrical energy obtained.

## Patentansprüche

1. Mechanismus zur Erzeugung elektrischer Energie (1) aufgrund des Fahrens von Fahrzeugen auf einer Straße (2), **dadurch gekennzeichnet, dass** dieser Folgendes umfasst:
- eine Gelenkstruktur (3) in Form eines Vierecks, deren vertikale Streben (4a, 4b) mit einer ersten und zweiten aufeinanderfolgenden Betätigungsoberfläche (5a, 5b) gekoppelt sind und deren horizontale Streben (6a, 6b) mit ihren Mittelpunkten an zwei festen Wellen (7a, 7b) befestigt sind, wobei sich die Struktur (3) unter der Höhe der Straße (2) befindet, sodass eine aufgrund des Fahrens eines Fahrzeugs erzeugte abwechselnde Bewegung der ersten Betätigungsoberfläche (5a) zwischen einer ersten Position über der Höhe der Straße (2) und einer zweiten Position unter der Höhe der Straße (2) durch ein Schaukeln der Struktur (3) in eine entgegengesetzte abwechselnde Bewegung der zweiten Betätigungsoberfläche (5b) übertragen wird; und
- zwei Verbindungsmittel (8a, 8b), die jeden Arm (61 a, 61 b) des Hebels, der durch eine horizontale Strebe (6a) der Struktur (3) mit zwei jeweiligen, an zwei entsprechenden Antriebsrädern (10a, 10b) angeordneten Ritzeln (9a, 9b) gebildet wird, sodass die Schaukelbewegung dieser horizontalen Strebe (6a) in eine Drehbewegung der Antriebsräder (10a, 10b) verwandelt wird, wobei diese Antriebsräder (10a, 10b) über Losräder (11a, 11b) ebenfalls mit der Welle (11) eines Generators verbunden und dazu ausgelegt sind, diese Drehbewegung an diese Welle (11) zu übertragen.

2. Mechanismus zur Erzeugung elektrischer Energie (1) nach Anspruch 1, **dadurch gekennzeichnet, dass** jedes Verbindungsmittel (8a, 8b) einen gezahnten Abschnitt umfasst, der an der horizontalen Strebe (6a) befestigt und mit dem Ritzel (9a, 9b) eines Antriebsrads (10b, 10b) verzahnt ist.

3. Mechanismus zur Erzeugung elektrischer Energie (1) nach Anspruch 2, **dadurch gekennzeichnet, dass** der gezahnte Abschnitt eine kreisrunde Form besitzt und konzentrisch gegenüber der festen Welle (7a, 7b) der horizontalen Strebe (6a, 6b) ist.

4. Mechanismus zur Erzeugung elektrischer Energie (1) nach Anspruch 1, **dadurch gekennzeichnet, dass** es sich bei den Betätigungsoberflächen (5a, 5b) um zwei gegen dieselbe Seite geneigte und entsprechend der Richtung der Straße (2) aufeinanderfolgend angeordnete Rampen handelt, sodass das Rad (R) eines Fahrzeugs kurz nach der Einwirkung auf eine Rampe auf die nächste Rampe einwirkt.

5. Mechanismus zur Erzeugung elektrischer Energie (1) nach Anspruch 1, **dadurch gekennzeichnet, dass** dieser zusätzlich eine Multiplikationsstufe umfasst, die zwischen jedem Antriebsrad (10a, 10b) und den Losrädern (11a, 11 b) der Generatorwelle (11) angeordnet ist.

6. Mechanismus zur Erzeugung elektrischer Energie (1) nach Anspruch 1, **dadurch gekennzeichnet, dass** das Verbindungsmittel (8a, 8b) an den Enden der horizontalen Strebe (6a) befestigt ist.

7. Mechanismus zur Erzeugung elektrischer Energie (1) nach Anspruch 1, **dadurch gekennzeichnet, dass** dieser zusätzlich Absenkungs-/Anhebungsmittel umfasst, die mit den festen Wellen (7a, 7b) der Gelenkstruktur (3) verknüpft und dazu ausgelegt sind, den Mechanismus zur Erzeugung von Energie (1) zu verbergen oder anzuheben, sodass es möglich ist, eine vollständige Kontinuität der Straße (2) zu erreichen.

8. Mechanismus zur Erzeugung elektrischer Energie (1) nach Anspruch 1, **dadurch gekennzeichnet, dass** dieser zusätzlich Folgendes umfasst:
- mindestens eine Platte (20), die so ausgeführt ist, quer in einer Straße (2) installiert zu werden, und die mit zwei Gruppen (21) von Nuten (22) ausgestattet ist, wobei sich diese Gruppen (21) in der Nähe der seitlichen Enden der Straße (2) befinden, über welche die Räder (R) der Fahrzeuge gemäß ihrer Konzipierung fahren;
- mobile Elemente (23), die gegenüber der Horizontalen der Straße (2) herausragen, deren Abmessungen dazu ausgelegt sind, in den unteren Teil der Nuten (22) der Platte (20) eingeführt zu werden, wobei diese mobilen Elemente (23) eine Senk- und Hebebewegung durchführen, nachdem die Räder (R) jedes Fahrzeugs über diese gefahren sind; und
- eine Vorrichtung zur Erzeugung elektrischer Energie (24), die mit den mobilen Elementen (23) verknüpft und dazu ausgelegt ist, die elektrische Energie aufgrund der Hebe- und Senkbewegungen dieser mobilen Elemente (23) zu erzeugen.

9. Mechanismus zur Erzeugung elektrischer Energie (1) nach Anspruch 8, **dadurch gekennzeichnet, dass** die Nuten (22) auf der Platte (20) in der Längsrichtung der Straße (2) und in Übereinstimmung mit der Fahrtrichtung "D" der Fahrzeuge parallel zueinander angeordnet sind.

10. Mechanismus zur Erzeugung elektrischer Energie (1) nach Anspruch 8, **dadurch gekennzeichnet, dass** jedes der mobilen Elemente (23) zwei Rampen (26, 27) umfasst, jeweils eine an einer Seite, wobei die in der Bewegungsrichtung der Fahrzeuge platzierte Rampe (26) sanfter ist und die Rampe (27), welche die Fahrt der Fahrzeuge in der entgegengesetzten Richtung erlaubt, eine stärkere Steigung besitzt.

11. Mechanismus zur Erzeugung elektrischer Energie (1) nach Anspruch 8, **dadurch gekennzeichnet, dass** dieser zusätzlich eine Folie (28) aus einem flexiblen und verformbaren Material umfasst, welche die Nuten (21) der Platte (20) abdeckt, wenn die mobilen Elemente (23) unter der Straße (2) verborgen sind.

12. Mechanismus zur Erzeugung elektrischer Energie (1) nach jedem der Ansprüche 8 bis 11, **dadurch gekennzeichnet, dass** dieser zusätzlich Folgendes umfasst:
- einen Geschwindigkeitssensor (30), der dazu ausgelegt ist, die Geschwindigkeit der entlang der Straße (2) fahrenden Fahrzeuge zu erhalten, bevor diese über den Mechanismus zur Erzeugung von Energie (1) fahren;
- einen Gewichtssensor (31), der das Gewicht jedes Fahrzeugs bestimmt, wenn dieses über den Mechanismus (1) fährt; und
- einen elektronischen Schaltkreis (32), der Informationen vom Geschwindigkeits- (30) und Gewichtssensor (31) erhält und abhängig von diesen Parametern den an die Generatorvorrichtung (24) und somit an die mobilen Elemente (23) der Platte (20) übertragenen Widerstand erhöht oder reduziert, sodass eine Erhöhung des Widerstands in dieser Generatorvorrichtung (24) einen größeren Widerstand gegenüber den fahrenden Fahrzeugen verursacht und somit eine größere elektrische Energie erhalten wird.

## Revendications

1. Mécanisme de production d'énergie électrique (1) à partir du passage de véhicules sur une route (2), **caractérisé en ce qu'**il comprend :
- une structure articulée (3) en forme de quadrilatère, dont les entretoises verticales (4a, 4b) sont accouplées aux première et seconde surfaces d'actionnement consécutives (5a, 5b), et dont les entretoises horizontales (6a, 6b) sont fixées en leur point central à deux axes fixes (7a, 7b), la structure (3) étant située sous le niveau de la route (2) pour qu'un mouvement d'alternance de la première surface d'actionnement (5a) entre une première position au-dessus du niveau de la route (2) et une seconde position sous le niveau de la route (2) provoqué par le passage d'un véhicule soit transmis par le basculement de la structure (3) dans un mouvement d'alternance opposé de la seconde surface d'actionnement (5b) ; et
- deux moyens de connexion (8a, 8b) qui connectent chaque bras (61 a, 61 b) du levier formé par une entretoise horizontale (6a) de la structure (3) avec deux pignons respectifs (9a, 9b) disposés dans deux roues d'entraînement (10a, 10b) associées, pour que le mouvement de basculement de ladite entretoise horizontale (6a) se transforme en mouvements de rotation des roues d'entraînement (10a, 10b), et où lesdites roues d'entraînement (10a, 10b) sont également connectées à l'axe d'un alternateur (11) par des roues folles (11a, 11 b) configurées pour transmettre ledit mouvement de rotation audit axe (11).

2. Mécanisme de production d'énergie électrique (1), selon la revendication 1, **caractérisé en ce que** chaque moyen de connexion (8a, 8b) comprend une section dentée fixée à l'entretoise horizontale (6a) et couplée au pignon (9a, 9b) d'une roue d'entraînement (10a, 10b).

3. Mécanisme de production d'énergie électrique (1), selon la revendication 2, **caractérisé en ce que** la section dentée a une forme circulaire et concentrique à l'axe fixe (7a, 7b) de l'entretoise horizontale (6a, 6b).

4. Mécanisme de production d'énergie électrique (1), selon la revendication 1, **caractérisé en ce que** les surfaces d'actionnement (5a, 5b) sont deux rampes inclinées en direction du même côté et disposées de manière consécutive en fonction du sens de la route (2) pour que la roue (R) d'un véhicule agisse sur une rampe juste après avoir agi sur la précédente.

5. Mécanisme de production d'énergie électrique (1), selon la revendication 1, **caractérisé en ce qu'**il comprend en outre un étage de multiplication disposé entre chaque roue d'entraînement (10a, 10b) et les roues folles (11 a, 11 b) de l'axe de l'alternateur (11).

6. Mécanisme de production d'énergie électrique (1), selon la revendication 1, **caractérisé en ce que** le moyen de connexion (8a, 8b) est fixé aux extrémités de l'entretoise horizontale (6a).

7. Mécanisme de production d'énergie électrique (1), selon la revendication 1, **caractérisé en ce qu'**il comprend en outre des moyens d'abaissement/élévation reliés aux axes fixes (7a, 7b) de la structure articulée (3), adaptés pour cacher ou élever le mécanisme de production d'énergie (1), en permettant ainsi d'obtenir une continuité totale dans la route (2).

8. Mécanisme de production d'énergie électrique (1), selon la revendication 1, **caractérisé en ce qu'**il comprend en outre :
- au moins une plaque (20), conçue pour être installée transversalement dans une route (2), équipée de deux groupements (21) de sillons (22), lesdits groupements (21) étant situés à proximité des extrémités latérales de la route (2) par lesquelles les roues (R) des véhicules sont censées passer,
- des éléments mobiles (23), qui dépassent par rapport au plan horizontal de la route (2), dont les dimensions sont adaptées pour être insérées dans leur partie inférieure dans les sillons (22) de la plaque (20), lesdits éléments mobiles (23) effectuant un mouvement d'abaissement et d'élévation après le passage sur eux des roues (R) de chaque véhicule, et
- un dispositif générateur d'énergie électrique (24), relié aux éléments mobiles (23) et adapté pour la production d'énergie électrique à partir des mouvements d'élévation et d'abaissement desdits éléments mobiles (23).

9. Mécanisme de production d'énergie électrique (1), selon la revendication 8, **caractérisé en ce que** les sillons (22) sont disposés sur la plaque (20) parallèlement l'un par rapport à l'autre, dans le sens longitudinal de la route (2) coïncidant avec la direction de circulation « D » des véhicules.

10. Mécanisme de production d'énergie électrique (1), selon la revendication 8, **caractérisé en ce que** chacun des éléments mobiles (23) comprend deux rampes (26, 27), une sur chacun de leurs côtés, la rampe (26) placée dans le sens du mouvement des véhicules étant plus douce, et la rampe (27) qui permet le passage des véhicules dans le sens opposé ayant une pente plus marquée.

11. Mécanisme de production d'énergie électrique (1), selon la revendication 8, **caractérisé en ce qu'**il comprend en outre une feuille (28) de matériau souple et déformable qui recouvre les sillons (21) de la plaque (20) lorsque les éléments mobiles (23) sont cachés sous la route (2).

12. Mécanisme de production d'énergie électrique (1), selon n'importe laquelle des revendications 8 à 11, **caractérisé en ce qu'**il comprend en outre :
- un capteur de vitesse (30) apte à obtenir la vitesse des véhicules qui circulent sur la route (2), avant qu'ils ne passent sur le mécanisme de production d'énergie (1),
- un capteur de poids (31) qui détermine le poids de chaque véhicule lorsqu'il passe sur le mécanisme (1), et
- un circuit électronique (32) qui reçoit des informations des capteurs de vitesse (30) et de poids (31) respectivement, et qui en fonction de ces paramètres augmente ou réduit la résistance transmise au dispositif générateur (24) et par conséquent aux éléments mobiles (23) de la plaque (20), pour qu'une augmentation de la résistance dans ledit dispositif générateur (24) provoque une plus grande résistance au passage du véhicule, et donc une énergie électrique obtenue plus importante.
